# EUROPEAN PATENT SPECIFICATION

(11) **EP 3 848 663 B1**
(45) Date of publication and mention of the grant of the patent: **24.04.2024**
(21) Application number: 20216122.0
(22) Date of filing: 30.11.2016
(51) Int. Cl.: F28D 20/02, E05D 15/24, E04B 9/04, C09K 5/06, E04F 13/08, E04F 13/14, F24D 3/16, F24F 5/00, E04C 2/52, E04B 9/00, F28D 20/00, F28D 21/00, F24D 3/14

(54) **HEATING AND COOLING SPACES**
HEIZEN UND KÜHLEN VON RÄUMEN
ESPACES DE CHAUFFAGE ET DE REFROIDISSEMENT

(30) Priority: 30.11.2015 AU 2015904957
(43) Date of publication of application: 14.07.2021
(62) Divisional of application: 16869407.3
(73) Proprietor: Invaus Pty Ltd, Toorak, Victoria 3142 (AU)
(72) Inventor: Perkins, Brian, Toorak, Victoria 3142 (AU); Brey, Stefan, Toorak, Victoria 3142 (AU)
(74) Representative: Cohausz & Florack

(56) References cited:
- WO-A2-2011/130657
- DE-A1-102014 006 336
- DE-U1-202009 002 910
- DE-U1-202010 016 878
- US-A1- 2013 134 347
- US-A1- 2013 139 995

## Description

### Technical Field

The present invention relates to a body for heating and cooling and to a method of forming said body. The body can be deployed in a panel or as a tile.

### Background

Thermal conditions within enclosed spaces depend on the mean radiant temperature of the space (which is related to the surface temperatures of objects within and enclosing the space), air temperature, humidity and air movement. It is generally desirable to control one or more of these conditions in order to provide thermal comfort within the space.

As the name suggests, air conditioning systems in buildings typically aim to generate thermal comfort conditions by cooling or heating of the air within the space and by controlling the relative humidity of the air supply. Air conditioning actively controls the thermal conditions of the space. However, generally such systems consume a large amount of energy during operation.

Other mechanisms for controlling thermal conditions include hydronic radiators for heating applications or passive chilled beams for cooling applications in commercial buildings. These mechanisms rely on convective heating and cooling of air which therefore limits the impact on the mean radiant temperature of the space. The total surface area of the heating/cooling unit that is exposed to the space is relatively small and as such high heating temperatures or low cooling temperatures are required to affect the mean radiant temperature within the space. In addition, with passive chilled beams the risk of condensation must be managed where surface temperatures could drop below the dew point. Panels for heating and cooling are known from DE202010016878U1, US2013/134347A1, US2013/139995A1 and DE102014006336A1.

### Summary of the Invention

An embodiment of the present invention relates to a body for cooling and heating formed from particles of a porous medium and a phase change material whereby at least some of the phase change material is loaded into the pore structure of the particles of the porous medium.

Another embodiment of the present invention relates to a body for cooling and heating including a porous medium comprising particles that are joined, and a phase change material that is loaded into the porous medium and has a latent heat of fusion which allows the body to cool and heat a space by transitioning between solid and liquid states.

In an embodiment, the phase change material is loaded into the porous medium by absorption or adsorption.

In an embodiment, the particles of the porous medium have a pore structure. The pore structure is a space, passage, crack or channel extending from an outer surface of the particle inwardly that can accommodate the phase change material.

The maximum pore size is determined by the surface tension of the phase change material because it is intended for the phase change material to be absorbed by the porous medium through capillary action. Because of the nature of the preferred phase change materials, the maximum pore size of the particles of the porous medium is preferably substantially less than 0.3mm in diameter.

According to the invention the change material loaded into the porous medium includes the phase change material located in the pore structure of the particles of the porous medium. For example, the phase change material may be mixed with particles of a porous medium such that at least some of the phase change material is drawn into the pore structure of the particles of the porous medium by capillary action. This mixture of the porous medium and the phase change material is then formed into the body. In this embodiment, the phase change material is substantially located within the pores of the particles of the porous medium.

In an embodiment, the phase change material loaded into the porous medium includes the phase change material being located in the voids between the particles of the porous medium.

In an embodiment, the phase change material could also be loaded in only the pore structure of the particles of the porous medium. Similarly, the phase change material may be located in only the voids between the particles of the porous medium. However, it is preferred that the phase change material can be located in both the pore structure and in the voids.

According to the invention the phase change material is retained within the porous medium by surface tension of the phase change material. The surface tension may hold the phase change material within the voids between the particles of porous medium or hold the phase change material within the pores of the particles of porous medium.

A phase change material is a material having a high latent heat of fusion which enables the material to store and release a large amount of thermal energy when the material changes state between liquid and solid. Latent heat of fusion is the change in enthalpy of the material which occurs when the material changes state between liquid and solid.

In an embodiment, 60-100% of the phase change material by weight of the porous medium is loaded into the pore structure of the porous medium. Suitably, 60-70% of the phase change material by weight of the porous medium is loaded into the pore structure of the porous medium. In an embodiment, the porous medium comprises diatomaceous earth or graphite foam. Suitably, the diameter, or an equivalent diameter, of the diatomaceous earth particles ranges from 0.9 - 3mm.

In an embodiment, the phase change material comprises an organic phase change material that is animal or plant based. Suitably, the organic phase change material is selected from paraffin, fatty acids, fatty alcohols or a mixture thereof.

In an embodiment, the phase change material has a melting point about 1-2°C below the targeted temperature. The temperature difference between the melting point and the targeted temperature provides a temperature gradient to heat or cool the space to the targeted temperature.

In an embodiment, the phase change material comprises an organic phase change material having a melting point ranging from 15-20°C. This may allow the body to maintain the ambient temperature of the space at about 1-2°C above the melting point range.

In an embodiment, the phase change material comprises a Pure Temp^{™} formulation. Suitably, the phase change material comprises a Pure Temp 18^{™} formulation. The Pure Temp 18^{™} formulation has a melting point of about 18°C. The Technical Data Sheet for Pure Temp 18^{™} are herein incorporated by reference.

In an embodiment, the body comprises phase change material in an amount of 0.6-1.0 kg per kg of porous medium. Suitably, the body comprises phase change material in an amount of 0.6 - 0.9 kg per kg of porous medium. More suitably, the body comprises phase change material in an amount of about 0.9 kg per kg of porous medium.

According to the invention the mixture also comprises a thermally conductive additive, being a thermally conductive metal fibre for enhancing the flexural strength and conductivity of the body

The thermally conductive additive may be used to improve heat transfer between the body and the space.

In an embodiment, the thermally conductive additive is a metal powder, graphite, boron nitride or a mixture thereof.

In an embodiment, the length of the metal fibres range from 0.125mm - 1.0mm. Suitably, the metal fibres comprise aluminium fibres.

In an embodiment, the mixture also comprises a binder. The binder may be used to enhance the strength of the body. In an embodiment, the binder comprises polyvinyl acetate (PVA), polyurethane. Suitably, the binder comprises a PVA emulsion in water or polyurethane resin or polyester resin.

In an embodiment, the binder comprises a cement and water mixture, or pre-gelatinised starch.

In an embodiment, the combination of phase change material and porous medium is referred to as 'Shape Stabilised Phase Change Material' (SSPCM). In an embodiment, this SSPCM includes phase change material at 37%-50% by weight of SSPCM and porous medium at 50%-63%.

In an embodiment, the body comprises 800-1,000g of SSPCM, which includes 350g-500g of phase change material.

In an embodiment, the binder is present in an amount of 0.04 - 0.4 kg per kg of SSPCM. Suitably, the binder is present in an amount of 0.04 - 0.1 kg per kg of SSPCM.

In an embodiment, the mixture also comprises a sealer to limit absorption of the binder in the porous medium.

The binder or sealer may cover at least some of the pores of the particles of the porous material. In one example, the pores of some particles of the porous material may be covered by the binder or sealer to encapsulate some of the phase change material in the particles. In another example, the pores of the particles of the porous material are not covered by the binder or sealer and the phase change material in the pores are unobstructed.

In an embodiment, the sealer comprises a PVA emulsion in water. Suitably, PVA is diluted in water at a ratio of between 1:2 - 1:4.

In an embodiment, the body comprises a composite material. Suitably, the composite material comprises SSPCM, metal fibres and a sealer and adhesive.

In an embodiment, the sealer and adhesive may be a PVA emulsion diluted with water.

In an embodiment, the sealer and adhesive is about 40% by weight of SSPCM.

In an embodiment, the dimensions of the body are 200mm wide x 300mm long and 25mm-35mm thick.

In an embodiment, the body has at least one groove formed in a surface of the body, each groove for receiving a capillary tube.

According to an embodiment of the present invention, there is provided a panel for providing heating and cooling, the panel comprising at least one body according to any one of the above embodiments.

In an embodiment, the panel comprises an outer layer provided on at least one side of the at least one body.

In an embodiment, the outer layer comprises a skin of plaster, cement, polymeric resin (eg. urethane) or mixture thereof.

In an embodiment, the outer layer comprises an architectural finished surface. The architectural finished surface may be paint, metal cladding, tiles, stone veneer or timber veneer

In an embodiment, the skin incorporates reinforcement fibres or mesh.

In an embodiment, the fibres or mesh are formed from glass, plastic, cellulose, metal, mineral or natural fibres or a mixture thereof.

In an embodiment, the skin incorporates a thermally conductive additive in the form of metal powder, metal fibres, graphite, boron nitride or a mixture thereof.

In an embodiment, the panel comprises at least one capillary tube for carrying liquid to receive energy from or provide energy to the panel. Suitably, the energy is thermal energy.

In an embodiment, the panel comprises a plurality of capillary tubes, each of the capillary tubes substantially parallel to each other and joined at one end to an inlet tube and the other end to an outlet tube.

In an embodiment, each capillary tube is connected to an inlet and an outlet to enable liquid to flow into and out of the capillary tube(s).

In an embodiment, the panel comprises a connector at the inlet and the outlet to enable connection of a conduit to each of the inlet and the outlet.

In an embodiment, the panel comprises an array of the bodies.

In an embodiment, the panel comprises a mounting portion for mounting the panel to a wall or ceiling, wherein the mounting feature comprises first and second projections extending from opposed sides of the panel or a recess formed in the panel.

An embodiment of the present invention relates to a method of forming a cooling and heating body, comprising:
mixing particles of a porous medium with a phase change material whereby at least some of the phase change material is loaded into the porous medium; and
forming the body from the porous medium and the phase change material.

In an embodiment, mixing particles of the porous medium with a phase change material loads at least some of the phase change material into the pore structure of the porous medium.

In an embodiment, mixing particles of the porous medium with a phase change material loads at least some of the phase change material into the voids between the particles of the porous medium.

In an embodiment, the method includes preparing the mixture using a high shear flow mixer.

In an embodiment, the method includes heating the porous medium before mixing the porous medium with the phase change material.

In an embodiment, the method includes heating the porous medium to 40 - 70°C.

In an embodiment, the method includes mixing the porous medium and phase change material in a mixer. Suitably, the method includes mixing the porous medium and phase change material in a tumble mixer, ribbon mixer or high shear flow mixer.

In an embodiment, the method includes adding a binder to the mixture.

In an embodiment, the method includes adding a sealer to the mixture prior to adding the binder to limit absorption of the binder in the porous medium.

In an embodiment, the method includes forming the body comprises casting the mixture into a mould and applying pressure. Suitably, a pressure of 90-130 tonnes/m² is applied onto the mixture to form the body. In an embodiment, a weight of 5.5-7.5 tonnes is applied onto the mixture to form the body. Applying pressure or weight onto the mixture reduces voidage when forming the body.

In an embodiment, the method includes forming at least one groove in a surface of the body for receiving a capillary tube.

Another embodiment of the present invention relates to a method of forming a cooling and heating panel comprising forming at least one body in accordance with the method of any one of the above embodiments and incorporating the at least one body in the panel.

In an embodiment, the method includes laying at least one capillary tube over at least one of the bodies.

In an embodiment, the method includes aligning each capillary tube with a groove that is formed in the respective bodies.

In an embodiment, the method includes arranging a plurality of the bodies into an array.

In an embodiment, the method includes laying a reinforcing mesh over the at least one body.

In an embodiment, the method includes applying an outer layer to at least one side of the at least one body.

Another embodiment of the present invention relates to a mounting system for mounting ceiling panels, the mounting system comprising:
a hinge portion for rotatable connection to a first panel; and
a holding assembly for holding a second panel against rotation.

In an embodiment, the holding assembly comprises a rotatable support member that is engaged by a tab on the second panel.

In an embodiment, the support member comprises a pivot portion that is received in an arcuate cavity and a projection extending from the pivot portion for engagement by the second panel.

In an embodiment, the support member is slidable with respect to the arcuate cavity to release the second panel from the holding assembly.

In an embodiment, the holding assembly comprises a stop to limit rotation of the support member.

In an embodiment, the mounting system comprises an elongate member that incorporates the arcuate cavity of the holding assembly and the hinge portion.

In an embodiment, the hinge portion comprises a further arcuate cavity.

In an embodiment, the elongate member comprises two curved portions that define respective arcuate cavities, the curved portions joined by a web.

In an embodiment, the arcuate cavities open to opposed sides of the elongate member.

In an embodiment, the mounting system also comprises a suspension system for suspending the hinge portion, the holding assembly and the panels connected thereto from the ceiling.

In an embodiment, the suspension assembly comprises a rotatable member that has a pivot portion that is received in the arcuate cavity of the holding assembly.

In an embodiment, the suspension assembly comprises a cable that is connected to the rotatable member.

### Brief Description of the Figures

Embodiments of the present invention will now be described, by way of example only, with reference to the accompanying examples, in which:
Figure 1 is an exploded perspective view of a panel for providing cooling and heating according to an embodiment of the present invention;
Figure 2A is a partial side view of the panel of Figure 1 and Figure 2B is a magnified view of a part of Figure 2A;
Figure 3 is a perspective schematic view of a plurality of a plurality of panels according to the embodiment shown in Figure 1 installed on a ceiling;
Figure 4 is a sectional view through B-B of Figure 3;
Figures 5A and B are sectional views through A-A of Figure 3 illustrating features of a mounting system for mounting the panels to the ceiling;
Figure 6 is a partial top view of two of the panels according to the embodiment of Figure 1 mounted to a wall; and
Figure 7A is a partial side view of the one of the panels of Figure 6 and Figure 7B is a magnified view of a part of Figure 7A in particular features of a mounting system for mounting the panel to the wall.
Figure 8 is a graph illustrating the specific heat measurements performed in accordance with ASTM C1784 of the first test run (FX6-0822 and FX6-0819) for a panel made according to an embodiment of the present invention.
Figure 9 is a cumulative energy storage vs temperature (Hystersis) (zero referenced to 6.6 °C) graph of the first test run (FX6-0822 and FX6-0819) for the panel in Figure 8.
Figure 10 is a change in enthalpy (per m²) vs temperature of phase change material graph of the first test run (FX6-0822 and FX6-0819) for the panel of Figure 8.
Figure 11 is a graph illustrating the specific heat measurements performed in accordance with ASTM C1784 of the second test run (FX6-0824 and FX6-0825) for a panel made according to an embodiment of the present invention.
Figure 12 is a cumulative energy storage vs temperature (Hystersis) (zero referenced to 6.6 °C) graph of the second test run (FX6-0824 and FX6-0825) for the panel of Figure 11.
Figure 13 is a change in enthalpy (per m²) vs temperature of phase change material graph of the second test run (FX6-0824 and FX6-0825) for the panel of Figure 11.

### Detailed Description

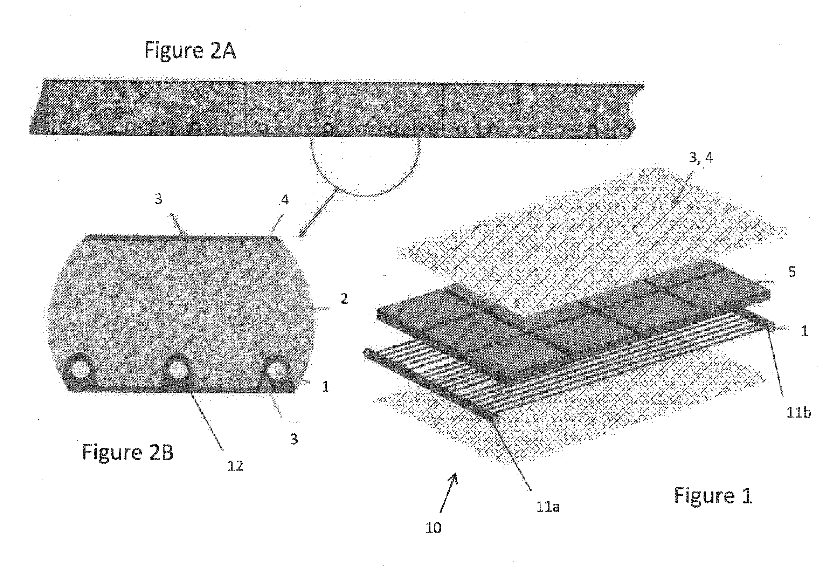

Referring firstly to Figures 1, 2A and 2B, a panel 10 for providing cooling and heating according to an embodiment of the present invention is shown. The panel 10 comprises a plurality of cores or bodies 5 arranged in a 4 x 3 array. It is to be appreciated that the number of bodies and their arrangement could be altered. In other embodiments, the panel could comprise a single unitary body.

Each body 5 is formed from a mixture 2 of particles of a porous medium (such as diatomaceous earth or graphite foam) and a phase change material (such as an organic phase change material selected from paraffin, fatty acids, fatty alcohols or a mixture thereof). In one example, the phase change material is Pure Temp 18^{™}. Properties of Pure Temp 18^{™} are set out below:

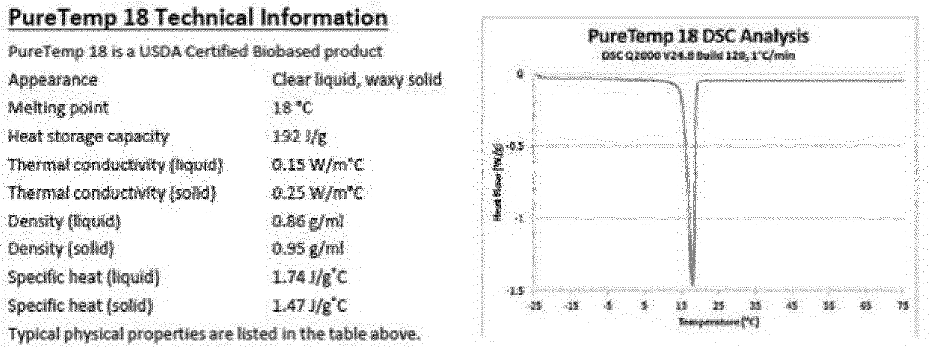

The combination of phase change material and porous medium is referred to as 'Shape Stabilised Phase Change Material' (SSPCM). The porous medium and phase change material are mixed such that at least some, generally 60 - 100% of the phase change material by weight of the porous medium is loaded into the pore structure of the porous medium particles.

The porous medium is formed as an aggregate of granules or particles. The particles have an average size of between 0.05 - 15mm, preferably 0.5 - 4mm, more preferably 1 - 3mm. The diameter of the pores in the porous medium is less than 0.3mm. The maximum pore size is determined by the surface tension of the phase change material because it is intended for the phase change material to be absorbed by the porous medium through capillary action. Because of the nature of the preferred phase change materials, the maximum pore size of the porous medium is preferably substantially less than 0.3mm in diameter. The surface tension of the phase change material may also contribute to the retention of the phase change material in the voids between the particles of the porous medium.

Because the phase change material is capable of storing and releasing large amounts of thermal energy without a change in temperature, the panel 10 can be used to control the thermal conditions of a space. Thus, the phase change material is selected as a material which has a melting temperature that is in the range from 15-40°C for cooling or heating applications. Suitably, the melting temperature ranges from 15-20°C. When heat enters a space (external heat gain through windows and walls or internal heat gain from people and equipment), the phase change material will melt and maintain a cool and constant temperature while absorbing heat through radiation and convective heat exchange between the surfaces and air in the space as well as directly from the occupants. On the other hand, when heat is lost from a space and comfort conditions become too cool, the phase change material can solidify and release thermal energy at constant temperature to provide radiant heating to the space and directly to the occupants. This may involve releasing thermal energy that has been stored in the phase change material during low heating demand periods. For cooling applications for example, the panel may operate on a diurnal cycle where the phase change material absorbs thermal energy to provide cooling during the day which is then emitted during cool night time conditions.

The porous medium having absorbed phase change material, advantageously 'shape stabilises' the phase change material loaded in the bodies 5. That is, the bodies 5 hold the phase change material has substantially changed to a liquid state because it is absorbed by and held within the porous structure of the porous medium through capillary action.

The mixture 2 from which each of the bodies 5 is formed also comprises a binder (such as a PVA emulsion, or polyurethane resin, or polyester resin or cement and water mixture) to bind the porous medium as well as a sealer to limit the absorption of the binder into the porous medium and therefore minimise the amount of binder required. In some embodiments, the sealer is a PVA emulsion diluted in water at a ratio of between 1:2 - 1:4. A minimal amount of the binder is used (0.04 - 0.4 kg per kg of SSPCM) to minimise the weight of the panel 10. This makes the bodies 5 brittle, however, other features (described below) of the panel are incorporated to provide flexural strength to the panel 10. In addition, each individual body is relatively small in size for ease of handling.

The mixture 2 from which each of the bodies 5 is formed may also comprise a thermally conductive additive, such as a metal powder, metal fibres, graphite, boron nitride or a mixture thereof. Suitably, the thermally conductive additive is aluminium fibre having a length ranging from 0.125mm - 1.0mm. This is to enhance the heat transfer through the porous medium and the phase change material.

The panel 10 also comprises a plurality of capillary tubes 1 for carrying liquid, typically water, to receive thermal energy from or provide thermal energy to the panel. The capillary tubes are arranged substantially parallel to each other and extend between first and second ends of the panel 10. Each capillary tube therefore extends over several of the bodies 5. In the illustrated embodiment, the capillary tubes 1 are in a linear arrangement. However, in other embodiments, the capillary tubes could be in a non-linear arrangement, such as sinusoidal or U-shaped arrangement. At one end, each capillary tube connects to a common inlet tube 11a and at the other end each capillary tube connects to a common outlet tube 11b. This arrangement of the capillary tubes may be referred to as a "capillary mat". The inlet tube 11a has an inlet and the outlet tube has an outlet 11b to enable flow of the liquid into and out of the capillary tubes 1, i.e. through the panel 10. As shown in Figures 2A and 2B, grooves 12 are formed in a surface of each body to receive a respective capillary tube. Advantageously, this reduces the bulk of the panel, protects the capillary tubes, as well as improves heat transfer between the capillary tubes and the bodies.

The capillary tubes 1 enable control of the temperature of the panel 10. By flowing a heated or chilled liquid through the capillary tubes, the panel can be heated or cooled. This could provide control of the temperature of the space by controlling the temperature of the panel. A particularly advantageous use of the capillary tubes is to 'recharge' the phase change material; that is to return the phase change material to a prior state (liquid or solid) to enable repeated operation of the phase change material to heat or cool a space. In some conditions, without actively recharging the phase change material, the panel will only be effective for a short period during extended periods of high or low temperature conditions.

For example, when there are several hot days in a row (e.g. above 30°C), the phase change material will liquefy on the first day to cool down a space. However, the external conditions may not cool sufficiently overnight to enable the phase change material to passively emit thermal energy and return to a solid state. Hence, the phase change material on the next day is already in a liquid form and will be ineffective in providing cooling. The capillary tubes can therefore be used to actively cool the phase change material to prepare the phase change material for reuse. In such an example, at least some of the waste heat extracted from the phase change material by the liquid in the capillary tubes could be rejected to the cooler external night time air.

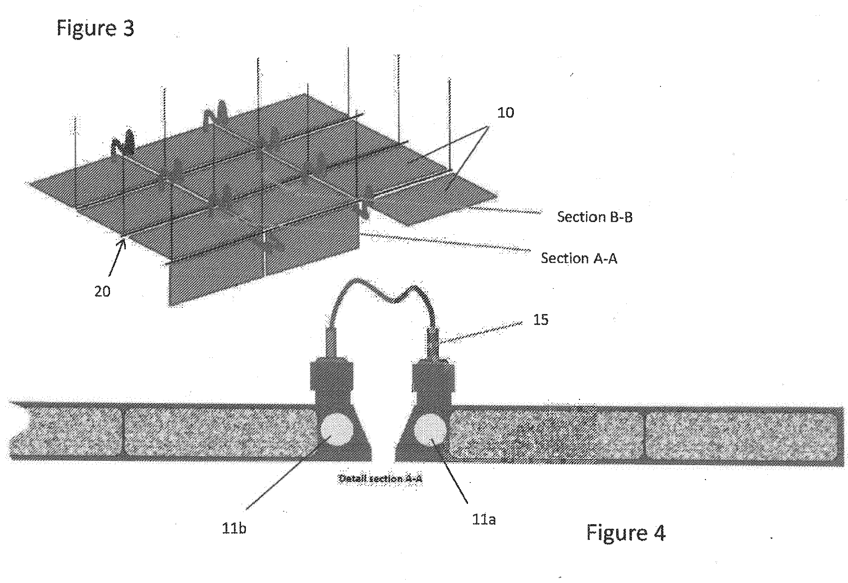

As shown in Figure 4, the inlet and outlet of the capillary tubes have a connector to enable connection of conduits in the form of hoses 15 between panels or between a panel and a source of liquid or a discharge for the liquid. The connectors may be conventional quick or 'snap fit' couplings. Alternatively the panels may be connected to supply and return flow conduits via other conventional fittings. Where the capillary tube mats consist of polypropylene or other thermoplastic material, connections may be formed by plastic welding.

Referring again to Figures 1, 2A and 2B, the panel 10 also comprises outer layers in the form of skins 3 that are applied over respective opposed sides of the array of bodies 5. Because the bodies 5 have limited flexural strength due to a low amount of binder, the skins 3, advantageously provide rigidity and strength to the panel 10 whilst enabling the weight of the panel to be reduced. Each skin 3 comprises plaster, cement, polymeric resin (e.g. urethane) or mixture thereof, which is applied over the bodies 5 (and the capillary tubes 1) in liquid form and then allowed to set and/or cure. The curing step may be performed at a temperature ranging from 20-25°C. If desired, the material used for the skins can be used to fill the gaps between adjacent bodies 5 in the panel. However, this is not necessary provided the gaps between the bodies are sufficiently narrow.

Each skin 3 may also incorporate fibres or, as illustrated in Figure 1, a mesh 4 of fibres for added rigidity and strength. The fibres can be glass, cellulose, plastic, mineral, metal or natural fibres. The material used for the skins 3 may also have a thermally conductive additive such as a metal powder, metal fibres, graphite, boron nitride or a mixture thereof to enhance the heat transfer through the porous medium and phase change material.

In other embodiments, the outer layer of the panel may be in the form of an architectural surface, such as paint, metal cladding, tiles, stone veneer or timber veneer may be applied to at least one side of the panel. The architectural surface may be applied over the skin or in other embodiments may be bonded to one or more of the bodies 5 instead of the skin where the architectural surface is capable of providing the necessary tensile strength. In any of the mentioned embodiments, an insulation layer may also be added to the panel.

The process of forming each body 5 and the panel 10 will now be described:
The mixture 2 used to form the bodies 5 is prepared by heating granules of the porous medium (to a temperature of 40 - 70°C for diatomaceous earth) and then tumble mixing the heated porous medium with the phase change material in a liquid state. Heating the porous medium ensures that the phase change material remains in its liquid state during the mixing process and can thus readily be absorbed by the porous medium. The mixing step occurs until about 60 - 100% of the phase change material by weight of the porous medium is absorbed into the pore structure of the porous medium.

The sealer is then mixed in with the mixture of the porous medium and the phase change material to surface seal the porous medium and limit the adsorption of the subsequently added binder. The mixture is then cast into moulds to form the bodies 5 under pressure.

Once the cast bodies are set, they are arranged into the required array for the panel 10. The capillary tubes 1 are then laid over a surface of one or more the bodies with each capillary tube aligned with and received in a groove 12 formed in respective bodies. The reinforcing mesh 4 is then laid over the top and the material for the skin 3 is applied as a liquid or slurry (generally by spraying) over the mesh. It is to be understood that the reinforcement mesh may be omitted where the casting compound has sufficient tensile strength in cured form or where the casting compound is mixed with reinforcement fibres. The panel 10 is then inverted into a casting pan or mould with the required surface finish or form liner. The skin 3 may be left to cure in the mould. With the panel inverted, mesh 4 and skin 3 is applied to the opposite side of the bodies 5.

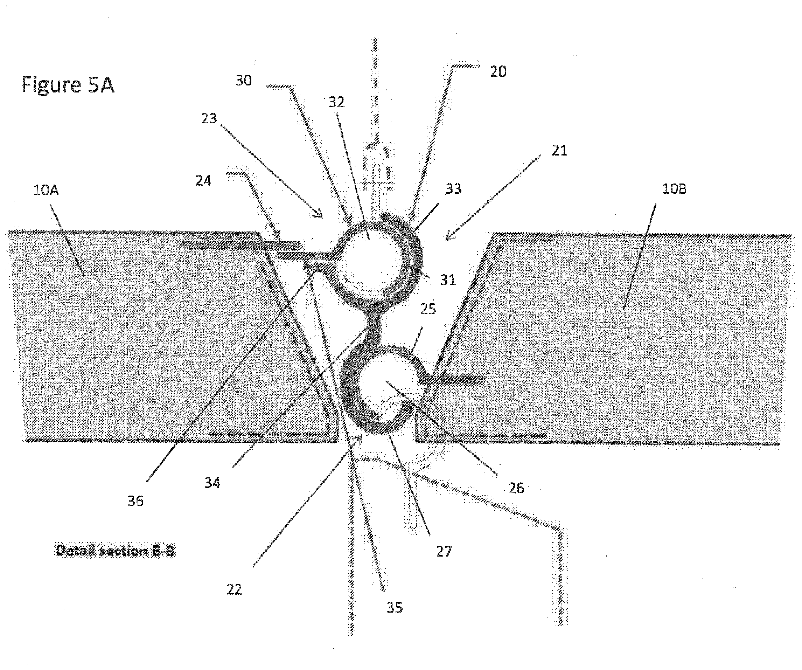

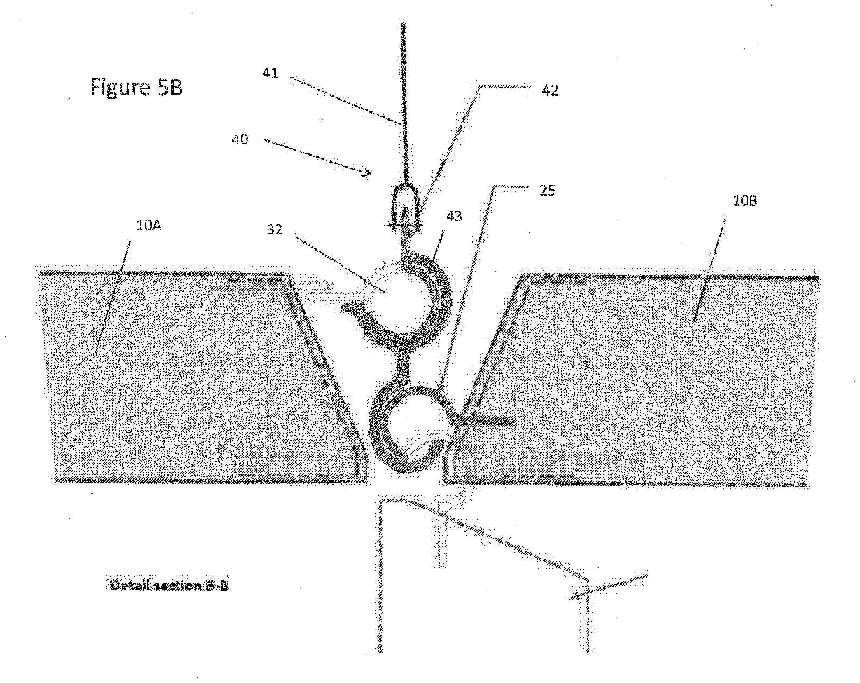

Referring now to Figures 3, 5A and 5B, a plurality of the panels 10 will now be described with respect to their installation on the ceiling of a building. The panels 10 are installed using a ceiling mounting system 20 that enables quick and easy installation as well as ease of access to the cavity behind the panels. When installed, the panels 10 provide radiant heating and cooling to the space under the ceiling.

The mounting system 20 comprises a plurality of elongate member 21 formed as aluminium extrusions that are each disposed between adjacent panels. Each member 21 engages opposite sides of the adjacent panels to operatively work in holding both panels to the ceiling. Thus, as will be appreciated from the description below, in order to mount a single panel to the ceiling using the mounting system, elongate members 21 must be provided on either side of the panel.

Referring in particular to Figures 5A and 5B, the mounting system comprises a hinge portion 22 for rotatable connection to a first panel 10A and a holding assembly 23 for holding a second panel 10B against rotation. Each panel 10A, 10B has a respective projection 24, 25 extending from the side of the panel 10A, 10B that engages with the hinge portion 22 and the holding assembly 23 respectively.

The hinge portion 22 comprises an arcuate cavity 26 that is defined by a curved portion 27 of the elongate member 21. The projection 25 extending from the second panel 10B is shaped to enable the projection to be received in and pivot with respect to the arcuate cavity 26 so that the second panel 10B can be pivoted between a lowered position and a raised position where the panel is mounted to the ceiling. The projection 25 is also shaped to be able to grip the curved portion 27 of the elongate member 21 when the second panel 10B is in its lowered position (as shown in outline in Figures 5A and 5B). As shown in the Figures, the projection 25 is in the form of a hook.

This configuration of the hinge portion 22 and the projection 25 enables easy installation of the second panel 10B as well as access to the cavity between the ceiling and the panel 10B after it has been installed. To install the second panel 10B, the curved or hooked projection 25 engages the curved portion 27 of the elongate member 21 with the second panel 10B in a substantially vertical orientation, i.e. its lowered position. The second panel 10B is then pivoted about this engagement between the projection 25 and the curved portion 27 to its raised position where the panel is mounted to the ceiling in a substantially horizontal orientation. To access the cavity behind the panel 10B, it can be swung back from its raised position to its lowered position. In the lowered position, the panel can remain hanging from the elongate member 21 by the engagement of the projection 25 with the curved portion 27 and returned to its raised position after access to the cavity is no longer required.

To hold the second panel 10B in its raised position, the second panel engages a holding assembly 23 disposed on the other side of the second panel (not shown). The holding assembly 23, however, will be described in respect of holding the first panel 10A as shown in Figures 5A and 5B.

The holding assembly 23 comprises a rotatable support member 30. The support member 30 comprises a pivot portion 31 received in an arcuate cavity 32 defined by another curved portion 33 of the elongate member 21. This second curved portion 33 is joined to the first curved portion 27 by a web 34. The elongate member 21 is also orientated in use so that the curved portion 33 of the holding assembly 23 is above the curved portion 27 forming the hinge portion 22.

The support member 30 also comprises a projection 35 in the form of a flap extending from the pivot portion 31. The projection 35 in use, engages with the projection 24 of the first panel 10B to hold the first panel in raised position, as shown in Figures 5A and 5B. The projection 24 is in the form of a tab. To bring the projection 24 of the first panel 10A into this engagement, the first panel 10A is pivoted upwardly. The projection 24 first engages the underside of the support member projection 35 and pushes the projection 35 upwardly, causing the support member 30 to rotate. This occurs until the first panel 10A is pivoted far enough up to go beyond engagement with the projection, at which point the support member 30 will fall back down under gravity. A stop 36 extends from the elongate member 21 to prevent over rotation of the support member 30. The first panel 10A is then lowered slightly to bring the projection 24 of the first panel 10A into engagement with and resting on the projection 35 of the support member 30. The support member 30 is thus configured to provide a 'clip-in' type arrangement to secure the first panel 10A in its raised position.

To enable the first panel 10A to be disengaged from the support member 30, the support member 30 is slidable with respect to the elongate member 21 to bring the projection 35 of the support member out of engagement with the projection 24 of the first panel 10A. This is achieved by enabling the pivot portion 31 of the support member 30 to slide within its arcuate cavity 32.

The mounting system 20 also comprises a suspension assembly 40 for suspending the panels from the ceiling. Advantageously, this provides for a substantial cavity behind the panels to locate the hoses 15 connecting the capillary tubes of the panels as well as other utilities related or unrelated to the operation of the panels.

The suspension assembly 40 comprises a plurality of cables 41 extending from the ceiling. Each cable 41 is connected to a rotatable member 42 that has a pivot portion 43 that is received in the arcuate cavity 32 of the holding assembly 23.

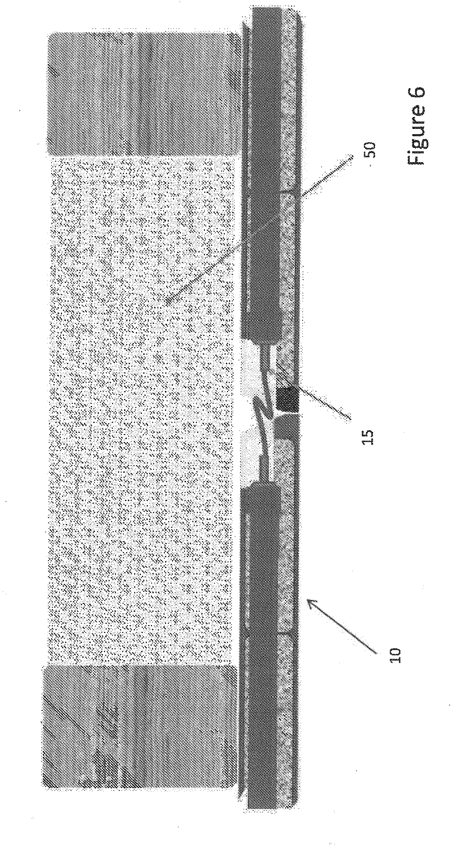

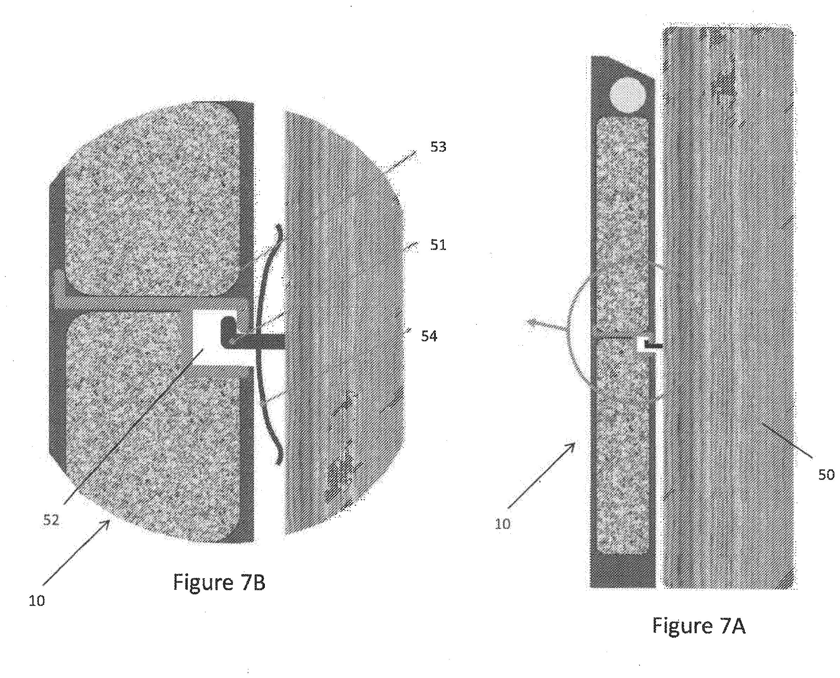

Referring now to Figures 6, 7A and 7B, a panel 10 will now be described in relation to its installation on a wall 50. When installed, the panel provides radiant heating and cooling to the space at least in part defined by the wall.

The wall 50 has a mounting 51 provided on the wall in the form of a plurality of hooks or a hook shaped rail. A recess 52 is formed in the panel for receiving the mounting 51. The recess 52 is an elongate cavity provided by an aluminium extrusion 53 that has been preformed in the panel 10 and is open on either side of the panel 10. To mount the panel 10 to the wall 50, the recess 52 is received over the mounting 51 and slid sideways into position. The mounting 51 also incorporates a spacer 54 in the form of a metal spring or other elastic flexible spacer. The spacer 54 maintains spacing and parallel alignment of the panel 10 with respect to the wall 50.

In other embodiments, the panels are used to line duct work or arranged in one or more stacks in which individual panels are spaced apart. In both these arrangements, air is allowed to flow over one or more surfaces of the panels to provide convective heating and/or cooling.

In further embodiments, the bodies 5 could be used as individual tiles that are supplied and installed on site as floor tiles or wall tiles. If incorporated, the grooves for receiving the capillary tubes are aligned between each of the tiles and the capillary tube mats aligned with and received in the aligned grooves. A screed (if the tiles are installed on a floor) or plaster or render (if the tiles are installed on a wall) is applied over the installed tiles as well as the capillary tubes (if included).

### Example

### Materials and Methods

A panel made in accordance with the claimed invention was tested to measure its thermal storage properties.

### The components of the panel

- Phase change material: Pure Temp 18^{™}
- Porous medium: Diatomaceous earth
- Thermally conductive additive: Aluminium fibres
- Binder: PVA emulsion in water
- Sealer: PVA emulsion in water

### The dimensions of the panel

| | |
|---|---|
| Mean thickness | 30.43 mm |
| Length x width | 589 mm x 589 mm |
| Weight | 8.078 kg |
| Apparent Density | 765 kg/m³ |

### Sample preparation and measurement details

The measurements were performed using a Fox 600 heat flow meter apparatus, incorporating two 254 mm square heat flow meter. The Fox 600 apparatus was operating specialist software for specific heat measurement. Specific heat and enthalpy change measurements were undertaken generally in accordance with ASTM C1784-14 *Test Method for Using a Heat Flow Meter Apparatus for Measuring Thermal Storage Properties of Phase Change Materials and Products".*

The test specimen was not conditioned before measurement.

Thickness was measured at 16 locations around the perimeter of the test specimen and the average value was taken as the mean thickness. Recorded specimen thickness varied between 28.2 mm and 32.6 mm, averaging 30.43 mm with a Standard deviation of 1.43 mm. Heat flow into (or out of) the test specimen was allowed to stabilise at 18 temperature steps spaced at 2K intervals.

For the first test run, the heating/melting cycle starting temperature was 5.6°C and the finish temperature was 39.6°C (FX6-0822). This was paired with a test run of a cooling/freezing cycle starting at 39.6°C and running down to 5.6°C (FX6-0819).

A second test run was undertaken at a 0.6 K offset, the heating/melting cycle starting temperature was 6.2°C and the finish temperature was 40.2°C (FX6-0824). This was paired with a test run of a cooling/freezing cycle starting at 40.2°C and running down to 6.2°C (FX6-0825).

### Results

A summary of the results is provided in Table 1 below.

**Table 1: Summary of the thermal properties of the sample panel**

| **Measurement number** | **Thickness** | **Mean Temperature** | **Specific Heat** | **Enthalpy change** |
|---|---|---|---|---|
| | **(mm)** | **(°C)** | **(MJ/m³.K)** | **(MJ/m²)** |
| FX6-0822 (Heating/ melting) | 30.4 | 12.62 | 1.0 | 0.06 |
| | | 14.62 | 1,4 | 0.09 |
| | | 16.62 | 3.4 | 0.21 |
| | | 16.63 | 14.7 | 0.89 |
| | | 20.62 | 1.0 | 0.06 |
| FX6-0819 (Cooling/ Freezing | 30.4 | 12.62 | 1.3 | -0.06 |
| | | 14.61 | 1.9 | -0.08 |
| | | 16.61 | 15.1 | -0.12 |
| | | 18.62 | 1.0 | -0.93 |
| | | 20.62 | 0.9 | -0.06 |
| FX6-OB24 (Heating/ melting) | 30.4 | 13.21 | 1.1 | 0.07 |
| | | 15.21 | 1.7 | 0.11 |
| | | 17.22 | 5.2 | 0.32 |
| | | 19.22 | 11.3 | 0.68 |
| | | 21.22 | 1.0 | 0.06 |
| FX6-0825 (Cooling/ Freezing | 30.4 | 13.21 | 1.4 | -0.07 |
| | | 15.21 | 2.7 | -0.08 |
| | | 17.21 | 12.4 | -0.16 |
| | | 19.22 | 1.0 | -0.76 |
| | | 21.22 | 0.9 | -0.06 |

The first test run reveal that the panel has a melting/freezing point of about 19°C and a specific heat of 14.7 MJ/m³K during the heating/melting cycle (FX6-0822) and a melting/freezing point about 17°C and a specific heat of 15.1 MJ/m³K during the cooling/freezing cycle (FX6-0819).

The second test runs reveal that the panel has a melting/freezing point of about 19°C and a specific heat of 11.3 MJ/m³K during the heating/melting cycle (FX6-0824) and a melting/freezing point about 17°C and a specific heat of 12.4 MJ/m³K during the cooling/freezing cycle (FX6-0825).

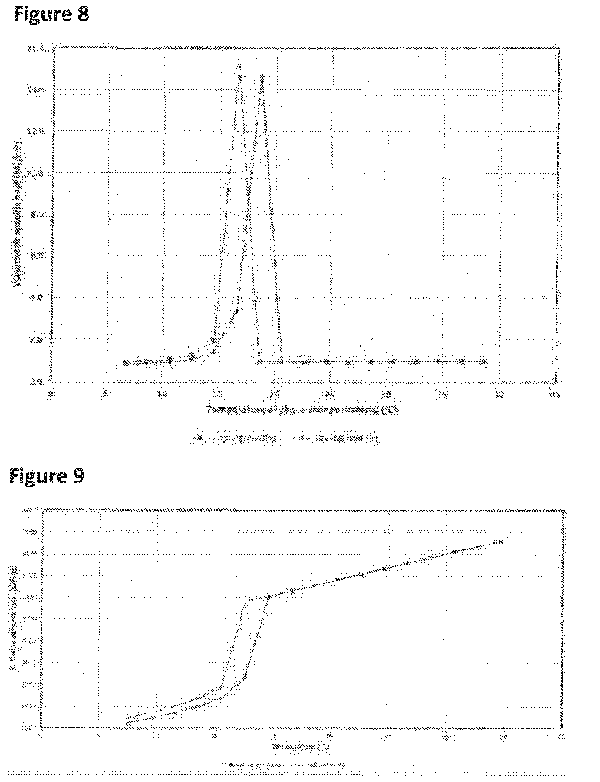

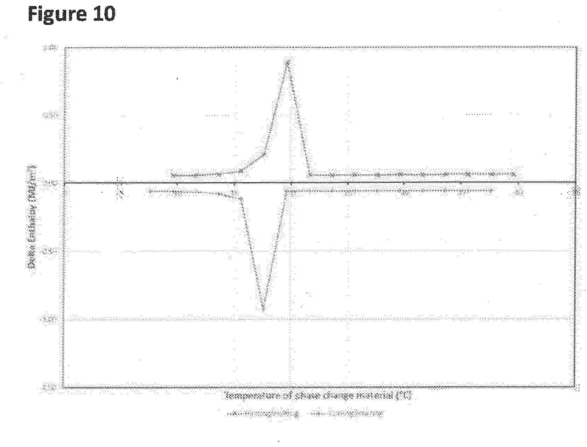

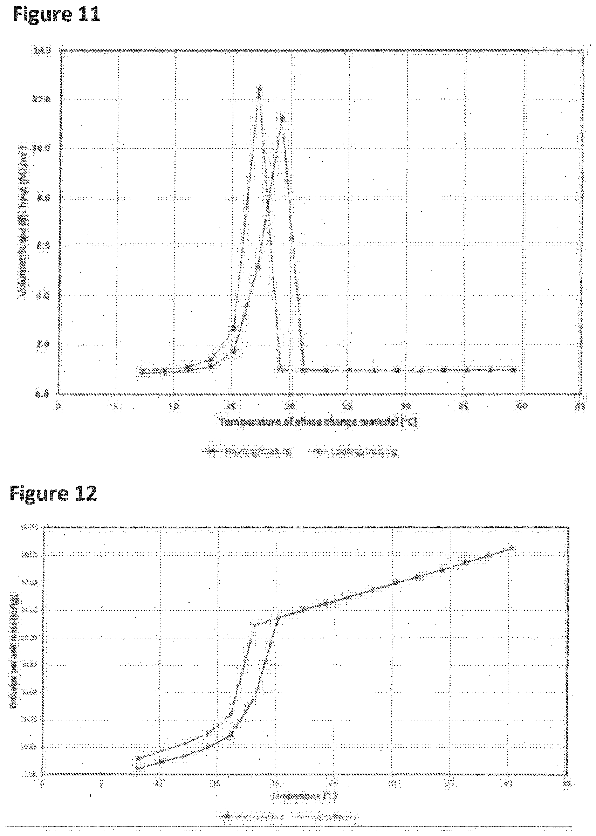

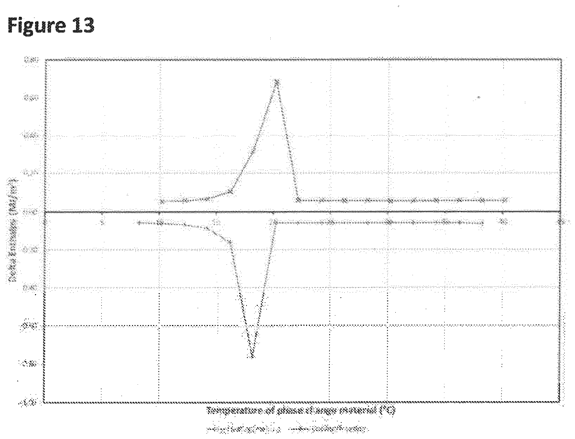

Figures 8-10 illustrate the various measurements recorded for the first test run (FX6-0822 and FX6-0819). Figures 11-13 illustrate the various measurements recorded for the second test run (FX6-0824 and FX6-0825). Tables 2 and 3 provide the consolidated data points used to plot Figures 8-10 and Figures 11-13, respectively.

**Table 2: Consolidated data for the first test run (FX6-0822 and FX6-0819).**

| **Mean Temperature** | **Enthalpy change (heating/melting)** | **Enthalpy change (cooling/freezing)** | **Specific heat (heating/melting)** | **Specific heat (cooling/freezing)** |
|---|---|---|---|---|
| **[°C]** | **[MJ/m³]** | **[MJ/m³]** | **[kJ/kg.K]** | **[kJ/kg.K]** |
| 6.61 | | -1.855 | 1123.30 | 1210.97 |
| 8.61 | 1.782 | -1.962 | 1157.30 | 1278.29 |
| 10.62 | 1.902 | -2.123 | 1233.74 | 1381.52 |
| 12.62 | 2 106 | -2.578 | 1370.23 | 1682.06 |
| 14.62 | 2.887 | -3.880 | 1885.05 | 2545.55 |
| 16.62 | 6.887 | -30.461 | 4444.86 | 19757.30 |
| 18.63 | 29.294 | -1.921 | 19169.90 | 1253.79 |
| 20.62 | 1.903 | -1.891 | 1241.52 | 1237.56 |
| 22.62 | 1.872 | -1.905 | 1215.35 | 1238.24 |
| 24.62 | 1.915 | -1.972 | 1245.24 | 1287.29 |
| 26.62 | 1.881 | -1.879 | 1228.78 | 1229.50 |
| 28.62 | 1.940 | -1.946 | 1257.58 | 1265.16 |
| 30.62 | 1.918 | -1.904 | 1253.13 | 1248.72 |
| 32 62 | 1.941 | -1.922 | 1260.69 | 1251.68 |
| 34.62 | 1.935 | -1.947 | 1260.88 | 1272.08 |
| 36.62 | 1.959 | -1.972 | 1273.76 | 1264.87 |
| 38.62 | 1.945 | | 1262.57 | 1260.30 |

**Table 3: Consolidated data for the second test run (FX6-0824 and FX6-0825).**

| **Mean Temperature** | **Enthalpy change (heating/melting)** | **Enthalpy change (cooling/freezing)** | **Specific heat (heating/melting)** | **Specific heat (cooling/freezing)** |
|---|---|---|---|---|
| **[°C]** | **[MJ/m³]** | **[MJ/m³]** | **[kJ/kg.K]** | **[kJ/kg.K]** |
| 7.22 | | -1.865 | 1096.68 | 1218.61 |
| 9.22 | 1.782 | -1.991 | 1161.86 | 1298.31 |
| 11.22 | 1.892 | -2.195 | 1236.60 | 1437.09 |
| 13.21 | 2.211 | -2.769 | 1443.46 | 1809.88 |
| 15.21 | 3.480 | -5.313 | 2267.01 | 3479.36 |
| 17.2.2 | 10.432 | -25.084 | 6760.31 | 16256.39 |
| 19.22 | 22.448 | -1.941 | 14720.91 | 1268.07 |
| 21.22 | 1.963 | -1.902 | 1278.51 | 1240.22 |
| 23.22 | 1.900 | -1.915 | 1136.25 | 1247.07 |
| 25.22 | 1.895 | -1.910 | 1237.12 | 1247.53 |
| 27.22 | 1.898 | -1.906 | 1236.91 | 1143.07 |
| 29.12 | 1.869 | -1.90.3 | 1221.72 | 1244.86 |
| 31.22 | 1.843 | -1.909 | 1202.42 | 1146.82 |
| 33.22 | 1.927 | -1.916 | 1254.76 | 1249.39 |
| 35.22 | 1.920 | -1.925 | 1254.72 | 1258.61 |
| 37.22 | 1,93.7 | -1.352 | 1262.91 | 1274.41 |
| 39.22 | 1.936 | | 1259.32 | 1267.40 |

## Claims

1. A panel (10) for providing heating and cooling, **characterised in that** the panel (10) comprises at least one body (5), the body (5) comprising
a porous medium (2) of porous particles that are joined, with each porous particle having a pore structure;
a phase change material that has a latent heat of fusion which allows the body (5) to cool and heat a space by transitioning between solid and liquid states, the phase change material being loaded into the particles such that at least some of the phase change material is directly loaded into the pore structures of the porous particles, and further, such that when in its liquid state, the at least some of the phase change material is held within the particles by surface tension within the pore structures of the porous particles; and **characterized in** further comprising
a thermally conductive metal fibre for enhancing the flexural strength and conductivity of the body (5);
wherein the body (5) is pressure-cast and is formed by casting a mixture of the porous medium (2), the phase change material and the thermally conductive metal fibre in a mould and applying pressure thereto.

2. The panel (10) as claimed in claim 1, wherein the maximum pore size of the porous medium is less than 0.3 mm in diameter.

3. The panel (10) as claimed in either claim 1 or 2, wherein the body also includes phase change material located in the voids between the particles of the porous medium (2).

4. The panel (10) as claimed in any one of the preceding claims, wherein 60 - 100% of the phase change material by weight of the porous medium is absorbed within a pore structure of the porous medium (2).

5. The panel (10) as claimed in any one of the preceding claims, wherein the phase change material (2) comprises an organic phase change material selected from paraffin, fatty acids, fatty alcohols or a mixture thereof.

6. The panel (10) as claimed in any one of the preceding claims, wherein the body (5) comprises phase change material in an amount of 0.6 - 1.0 kg per kg of porous medium.

7. The panel (10) as claimed in any one of the preceding claims, wherein the body (5) includes a binder.

8. The panel as claimed in claim 7, wherein the binder comprises any one of a PVA emulsion in water, polyurethane resin, polyester resin or cement and water mixture, and a sealer to limit the absorption of the binder into the porous medium.

9. The panel (10) as claimed in any one of the preceding claims, wherein the body (5) has at least one groove (12) formed in a surface of the body (5), each groove (12) for receiving a capillary tube (1).

10. The panel (10) as claimed in any one of the preceding claims, wherein the panel (10) comprises an outer layer provided on at least one side of the at least one body (5).

11. The panel (10) as claimed in claim 10, wherein the outer layer comprises a skin (3) of plaster, cement, polymeric resin or mixture thereof.

12. A method of forming a panel (10) as claimed in any one of the preceding claims including laying the at least one capillary tube (1) over at least one of the bodies (5).

13. The method (10) as claimed in claim 12, wherein the method includes aligning each capillary tube (1) with a groove (12) that is formed in the respective bodies (5).

14. The method as claimed in either claim 12 or 13, wherein the method includes laying a reinforcing mesh (4) over the at least one body (5).

15. The method as claimed in any one of claims 12 to 14, wherein the method includes pouring the mixture of the porous medium (2), the phase change material and the thermally conductive material into a mould, and applying a pressure thereto to form the body (5), such that the particles of the porous medium (2) are joined.

## Patentansprüche

1. Paneel (10) zum Heizen und Kühlen, **dadurch gekennzeichnet, dass** das Paneel (10) mindestens einen Körper (5) umfasst, wobei der Körper (5) umfasst:
ein poröses Medium (2) aus porösen Teilchen, die miteinander verbunden sind, wobei jedes poröse Teilchen eine Porenstruktur aufweist;
ein Phasenänderungsmaterial, das eine latente Schmelzwärme hat, die es dem Körper (5) ermöglicht, einen Raum durch Übergang zwischen festen und flüssigen Zuständen zu kühlen und zu heizen, wobei das
Phasenänderungsmaterial so in die Teilchen gefüllt ist, dass mindestens ein Teil des Phasenänderungsmaterials direkt in die Porenstrukturen der porösen Teilchen gefüllt ist, und ferner so, dass, wenn es sich in seinem flüssigen Zustand befindet, der mindestens eine Teil des Phasenänderungsmaterials durch Oberflächenspannung innerhalb der Porenstrukturen der porösen Teilchen in den Teilchen gehalten wird; und **dadurch gekennzeichnet, dass** es ferner umfasst eine wärmeleitende Metallfaser zur Erhöhung der Biegefestigkeit und Leitfähigkeit des Körpers (5);
wobei der Körper (5) druckgegossen ist und durch Gießen eines Gemischs aus dem porösen Medium (2), dem Phasenwechselmaterial und der wärmeleitenden Metallfaser in eine Form und Ausüben von Druck auf diese gebildet wird.

2. Paneel (10) nach Anspruch 1, wobei die maximale Porengröße des porösen Mediums weniger als 0,3 mm im Durchmesser beträgt.

3. Paneel (10) nach Anspruch 1 oder 2, wobei der Körper auch ein Phasenwechselmaterial enthält, das sich in den Hohlräumen zwischen den Partikeln des porösen Mediums (2) befindet.

4. Paneel (10) nach einem der vorhergehenden Ansprüche, wobei 60 - 100 % des Phasenwechselmaterials, bezogen auf das Gewicht des porösen Mediums, innerhalb einer Porenstruktur des porösen Mediums (2) absorbiert werden.

5. Paneel (10) nach einem der vorhergehenden Ansprüche, wobei das Phasenwechselmaterial (2) ein organisches Phasenwechselmaterial umfasst, das aus Paraffin, Fettsäuren, Fettalkoholen oder einer Mischung davon ausgewählt ist.

6. Paneel (10) nach einem der vorhergehenden Ansprüche, wobei der Körper (5) Phasenwechselmaterial in einer Menge von 0,6 - 1,0 kg pro kg poröses Medium umfasst.

7. Paneel (10) nach einem der vorhergehenden Ansprüche, wobei der Körper (5) ein Bindemittel umfasst.

8. Paneel nach Anspruch 7, wobei das Bindemittel eine PVA-Emulsion in Wasser, ein Polyurethanharz, ein Polyesterharz oder ein Zement-Wasser-Gemisch und einen Versiegler zum Begrenzen der Absorption des Bindemittels in das poröse Medium umfasst.

9. Paneel (10) nach einem der vorhergehenden Ansprüche, wobei der Körper (5) mindestens eine in einer Oberfläche des Körpers (5) ausgebildete Nut (12) aufweist, wobei jede Nut (12) zur Aufnahme eines Kapillarrohrs (1) dient.

10. Paneel (10) nach einem der vorhergehenden Ansprüche, wobei das Paneel (10) eine äußere Schicht umfasst, die auf mindestens einer Seite des mindestens einen Körpers (5) vorgesehen ist.

11. Paneel (10) nach Anspruch 10, wobei die äußere Schicht eine Haut (3) aus Gips, Zement, Polymerharz oder einer Mischung davon umfasst.

12. Verfahren zur Herstellung eines Paneels (10) nach einem der vorhergehenden Ansprüche, bei dem das mindestens eine Kapillarrohr (1) über mindestens einen der Körper (5) gelegt wird.

13. Verfahren (10) nach Anspruch 12, wobei das Verfahren das Ausrichten jedes Kapillarrohrs (1) mit einer Nut (12) umfasst, die in den jeweiligen Körpern (5) ausgebildet ist.

14. Verfahren nach Anspruch 12 oder 13, wobei das Verfahren das Verlegen eines Verstärkungsnetzes (4) über den mindestens einen Körper (5) umfasst.

15. Verfahren nach einem der Ansprüche 12 bis 14, wobei das Verfahren das Gießen des Gemisches aus dem porösen Medium (2), dem Phasenwechselmaterial und dem wärmeleitenden Material in eine Form und das Ausüben eines Drucks darauf umfasst, um den Körper (5) zu bilden, so dass die Teilchen des porösen Mediums (2) verbunden werden.

## Revendications

1. Un panneau (10) pour fournir du chauffage et du refroidissement, **caractérisé en ce que** le panneau (10) comprend au moins un corps (5), le corps (5) comprenant :
un milieu poreux (2) de particules poreuses qui sont assemblées, où chaque particule poreuse a une structure de pores ;
un matériau à changement de phase qui a une chaleur latente de fusion qui permet au corps (5) de refroidir et de chauffer un espace en passant de un état solide à un état liquide, le matériau à changement de phase étant chargé dans les particules de telle sorte qu'au moins une partie du matériau à changement de phase est directement stocke dans les structures des pores des particules poreuses et, en outre, de telle sorte qu'à l'état liquide, au moins une partie du matériau à changement de phase est maintenue dans les particules par de la tension superficielle dans les structures des pores des particules poreuses ; et **caractérisé en outre en ce qu'**il comprend
une fibre métallique thermoconductrice pour améliorer la résistance à flexion et la conductivité du corps (5) ;
où le corps (5) est moulé sous pression et est formé en coulant un mélange du milieu poreux (2), du matériau à changement de phase et de la fibre métallique thermoconductrice dans un moule et en y appliquant de la pression.

2. Le panneau (10) selon la revendication 1, où la taille maximale des pores du milieu poreux est inférieure à 0,3 mm de diamètre.

3. Le panneau (10) selon la revendication 1 ou 2, où le corps comprend en outre un matériau à changement de phase situé dans les vides entre les particules du milieu poreux (2).

4. Le panneau (10) selon l'une des revendications précédentes, où 60 à 100 % du matériau à changement de phase en poids du milieu poreux est absorbé dans une structure poreuse du milieu poreux (2).

5. Le panneau (10) selon l'une des revendications précédentes, où le matériau à changement de phase (2) comprend un matériau à changement de phase organique choisi parmi la paraffine, les acides gras, les alcools gras ou un mélange de ceux-ci.

6. Le panneau (10) selon l'une des revendications précédentes, où le corps (5) comprend un matériau à changement de phase dans une proportion de 0,6 à 1,0 kg par kg de milieu poreux.

7. Le panneau (10) selon l'une des revendications précédentes, dans lequel le corps (5) comprend un agglutinant.

8. Le panneau selon la revendication 7, dans lequel l'agglutinant comprend une quelconque d'une émulsion de PVA dans l'eau, une résine de polyuréthane, une résine de polyester ou un mélange de ciment et d'eau, et un scellant pour limiter l'absorption de l'agglutinant dans le milieu poreux.

9. Le panneau (10) selon l'une des revendications précédentes, où le corps (5) a au moins une rainure (12) formée sur une surface du corps (5), chaque rainure (12) pour recevoir un tube capillaire (1).

10. Le panneau (10) selon l'une des revendications précédentes, où le panneau (10) comprend une couche extérieure placée sur au moins un côté du corps (5).

11. Le panneau (10) selon la revendication 10, où la couche externe comprend une peau (3) en plâtre, de ciment, de résine polymère ou un mélange de ceux-ci.

12. Un procédé de formation d'un panneau (10) selon l'une des revendications précédentes comprenant poser au moins un tube capillaire (1) sur au moins un des corps (5).

13. La méthode (10) selon la revendication 12, où la méthode comprend aligner chaque tube capillaire (1) avec une rainure (12) qui est formée dans les corps respectifs (5).

14. La méthode selon la revendication 12 ou 13, où le procédé comprend poser un treillis de renforcement (4) sur l'au moins un corps (5).

15. La méthode selon l'une des revendications 12 à 14, où la méthode comprend verser le mélange du milieu poreux (2), du matériau à changement de phase et du matériau thermoconducteur dans un moule et à y appliquer une pression pour former le corps (5), de sorte que les particules du milieu poreux (2) sont jointes.
